# FASCICULE DE BREVET EUROPEEN

(11) **EP 2 660 095 B1**
(45) Date de publication et mention de la délivrance du brevet: **23.11.2022**
(21) Numéro de dépôt: 13166370.0
(22) Date de dépôt: 03.05.2013
(51) Int. Cl.: B60L 53/14, B60L 53/20, B60L 53/31, H02J 7/02, H02M 7/81

(54) **Etage de conversion, convertisseur électrique comportant un tel étage de conversion, dispositif de conversion d'un courant alternatif en un courant continu comportant un tel convertisseur, et borne de rechargement d'une batterie électrique comportant un tel convertisseur ou dispositif de conversion**
Wandlerstufe, Stromrichter, der eine solche Wandlerstufe umfasst, Gleichrichter, der einen solchen Stromrichter umfasst, und Batterieladeanordnung, die einen solchen Stromrichter oder eine solche Wandlerstufe umfasst
Converter stage, electrical converter comprising such a converter stage, ac/dc converter comprising such a converter, and battery charching terminal comprising such a converter or converter stage

(30) Priorité: 04.05.2012 FR 1254136; 13.11.2012 FR 1260799
(43) Date de publication de la demande: 06.11.2013
(73) Titulaire: Schneider Electric Industries SAS, 92500 Rueil-Malmaison (FR)
(72) Inventeur: Gailla, Charles, 38400 Saint Martin d'Heres (FR); Meysenc, Luc, 38710 Mens (FR)
(74) Mandataire: Lavoix

(56) Documents cités:
- EP-A1- 2 405 565
- EP-A2- 2 413 452
- WO-A1-2010/035338
- WO-A1-2011/159241
- DE-A1- 4 107 391
- DE-A1-102009 028 959
- DE-A1-102010 039 886
- US-A- 3 736 490
- US-A- 4 920 475
- US-A- 5 157 319
- US-A1- 2012 091 792
- US-B2- 6 683 389
- SERKAN DUSMEZ ET AL: "Comprehensive analysis of high quality power converters for level 3 off-board chargers", 2011 IEEE VEHICLE POWER AND PROPULSION CONFERENCE (VPPC 2011) : CHICAGO, ILLINOIS, USA, 6 - 9 SEPTEMBER 2011, IEEE, PISCATAWAY, NJ, 6 September 2011 (2011-09-06), pages 1-10, XP031974886, DOI: 10.1109/VPPC.2011.6043096 ISBN: 978-1-61284-248-6

## Description

La présente invention concerne un étage de conversion électrique, propre à être connecté, d'une part, à des bornes intermédiaires d'un bus électrique de tension continue, et d'autre part, à des bornes de sortie, l'étage de conversion comprenant P branches de commutation, P étant supérieur ou égal à 2, de préférence égal à 3, les branches de commutation étant connectées en parallèle entre les bornes intermédiaires, chaque branche de commutation comportant un premier et un deuxième interrupteurs électroniques commandables connectés en série et reliés entre eux par un point milieu, le premier interrupteur étant connecté entre la première borne intermédiaire et le point milieu correspondant, et le deuxième interrupteur étant connecté entre la deuxième borne intermédiaire et le point milieu correspondant, chaque interrupteur comportant un élément semi-conducteur et une diode connectée en antiparallèle de l'élément semi-conducteur, chaque élément semi-conducteur étant commutable entre un état passant et un état bloqué, et des moyens de commande des interrupteurs électroniques suivant une loi de commande.

La présente invention concerne également un convertisseur électrique, propre à être relié à un réseau électrique alternatif comportant M phase(s), M étant supérieur ou égal à 1, le convertisseur comprenant un premier étage de conversion formant redresseur de tension et un deuxième étage de conversion connecté en sortie du premier étage de conversion, le deuxième étage de conversion étant tel que défini ci-dessus.

L'invention concerne également un dispositif de conversion d'un courant alternatif en un courant continu comportant un tel convertisseur électrique.

L'invention concerne également une borne de rechargement d'une batterie électrique, notamment d'une batterie électrique de véhicule automobile, comprenant un tel convertisseur électrique ou un tel dispositif de conversion.

L'invention s'applique en particulier à une borne de rechargement propre à délivrer en sortie une tension continue comprise entre 5 V et 1 kV, de préférence comprise entre 10 V et 500 V, et un courant continu compris entre 0 et 250 A, de préférence compris entre 0 et 125 A.

Le document DE 41 07 391 A1 décrit un véhicule électrique avec un onduleur alimenté par une batterie. Le document DE 10 2010 039886 A1 décrit un système d'entraînement pour un véhicule alimenté par une batterie. Le document US 4,920,475 A décrit un convertisseur de traction et un appareil de chargement électrique d'une batterie. Le document FR 2 934 217 A1 décrit une chaîne de traction électrique pour un véhicule automobile. Le document DE 10 2009 028959 A1 décrit un système de batterie.

Afin de recharger une batterie électrique, on connaît un dispositif de conversion d'un courant alternatif en un courant continu, propre à être relié à un réseau électrique alternatif, tel qu'un réseau triphasé. Ce dispositif de conversion comprend un redresseur de tension connecté au réseau triphasé, le redresseur de tension étant formé d'un pont de diodes. Ce dispositif de conversion comprend également un convertisseur Buck connecté en sortie du redresseur de tension et propre à convertir la tension continue issue du redresseur en une autre tension continue de plus faible valeur.

Le convertisseur Buck comprend deux bornes d'entrée, deux bornes de sortie, ainsi qu'un interrupteur et une diode connectés entre les bornes d'entrée et reliés entre eux par un point intermédiaire. Le convertisseur Buck comprend également un condensateur connecté entre les deux bornes de sortie et une bobine électromagnétique connectée entre une borne du condensateur et ledit point intermédiaire. L'interrupteur est un élément semi-conducteur, tel qu'un transistor.

Toutefois, le transistor et la bobine électromagnétique sont relativement coûteux et présentent en outre un encombrement important, le transistor et la bobine électromagnétique étant dimensionnés pour permettre le passage de forts courants, tels que des courants de l'ordre de 100 A.

Le but de l'invention est donc de proposer un étage de conversion de moindre coût, tout en permettant le passage de forts courants, tels que des courants de l'ordre de 100 A.

A cet effet, l'invention a pour objet un étage de conversion selon la revendication 1.

Suivant d'autres aspects avantageux de l'invention, l'étage de conversion est selon l'une quelconque des revendications 2 à 7.

La présente invention a également pour objet un convertisseur électrique selon la revendication 8.

Suivant un autre aspect avantageux de l'invention, le convertisseur électrique est selon la revendication 9.

La présente invention a également pour objet un dispositif de conversion selon la revendication 10.

Suivant un autre aspect avantageux de l'invention, le dispositif de conversion est selon la revendication 11.

La présente invention a également pour objet une borne de rechargement selon la revendication 12.

Suivant un autre aspect avantageux de l'invention, la borne de rechargement est selon la revendication 13.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'une borne de rechargement comportant un câble de liaison électrique muni d'un connecteur électrique enfiché dans un connecteur complémentaire d'un véhicule automobile,
- la figure 2 est un schéma électrique d'un élément de conversion selon un premier mode de réalisation de l'invention, comprenant un premier étage de conversion et un deuxième étage de conversion connectés en sortie du premier étage, le deuxième étage comportant trois branches de commutation, chaque branche de commutation comportant un premier et un deuxième interrupteurs formés chacun d'un élément semi-conducteur et d'une diode connectée en antiparallèle de l'élément semi-conducteur,
- la figure 3 est un ensemble de trois courbes représentant chacune la tension aux bornes d'un premier interrupteur correspondant, lorsque le deuxième étage de conversion fonctionne en convertisseur Buck,
- la figure 4 est un ensemble de trois courbes représentant chacune le courant circulant dans l'élément semi-conducteur d'un premier interrupteur correspondant, en mode de fonctionnement Buck du deuxième étage de conversion,
- la figure 5 est un ensemble de trois courbes représentant chacune le courant circulant dans la diode d'un deuxième interrupteur correspondant, en mode de fonctionnement Buck du deuxième étage de conversion,
- la figure 6 est un ensemble de deux courbes représentant respectivement le courant et la tension délivrés en sortie de l'élément de conversion de la figure 2, en mode de fonctionnement Buck du deuxième étage de conversion,
- la figure 7 est une vue analogue à celle de la figure 2 selon une variante du premier mode de réalisation,
- la figure 8 est un ensemble de courbes, trois courbes représentant chacune le courant circulant dans la diode d'un premier interrupteur correspondant, trois courbes représentant chacune le courant circulant dans l'élément semi-conducteur d'un deuxième interrupteur correspondant, et deux courbes représentant le courant en sortie de l'élément de conversion de la figure 2, et respectivement en l'entrée du deuxième étage de conversion, en mode de fonctionnement Boost du deuxième étage de conversion,
- la figure 9 est un schéma électrique de l'élément de conversion selon un deuxième mode de réalisation de l'invention, et
- la figure 10 est un schéma électrique d'un autre élément de conversion propre à passer d'un mode de fonctionnement Boost à un mode de fonctionnement Buck, et inversement, par commutation de deux contacteurs.

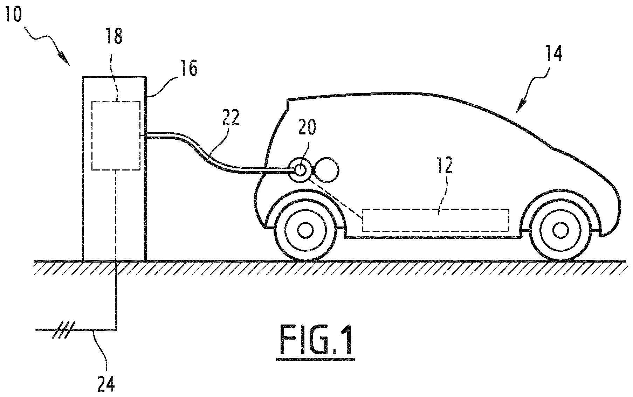

Sur la figure 1, une borne 10 de rechargement d'une batterie électrique 12 d'un véhicule automobile 14 comprend un boîtier 16 et un élément de conversion électrique 18 disposé dans le boîtier 16.

La borne de rechargement 10 comprend également un connecteur électrique 20 destiné à être relié électriquement à la batterie 12. En complément, la borne 10 comprend un câble de liaison électrique 22, agencé au moins partiellement à l'extérieur du boîtier 16 et reliant le connecteur électrique 20 à l'élément de conversion 18.

En variante non représentée, la borne de rechargement 10 ne comporte pas de câble de liaison électrique agencé à l'extérieur du boîtier, le connecteur électrique 20 étant alors directement fixé sur le boîtier 16. Selon cette variante, le véhicule automobile 14 est équipé d'un câble de liaison électrique, afin de pouvoir relier la batterie électrique 12 au connecteur 20 de la borne de rechargement.

Le boîtier 16 est prévu pour protéger l'élément de conversion 18 de différentes conditions climatiques, notamment de la pluie, la borne de rechargement 10 étant disposée en voirie.

L'élément de conversion 18 est relié à un réseau électrique alternatif 24 comportant M phases, M étant supérieur ou égal à 1. Dans l'exemple de réalisation de la figure 1, le réseau alternatif 24 est un réseau triphasé, et M est égal à 3. Le réseau triphasé 24 présente, par exemple, une tension de l'ordre de 400 V en triphasé et une fréquence égale à 50 Hz ou 60 Hz.

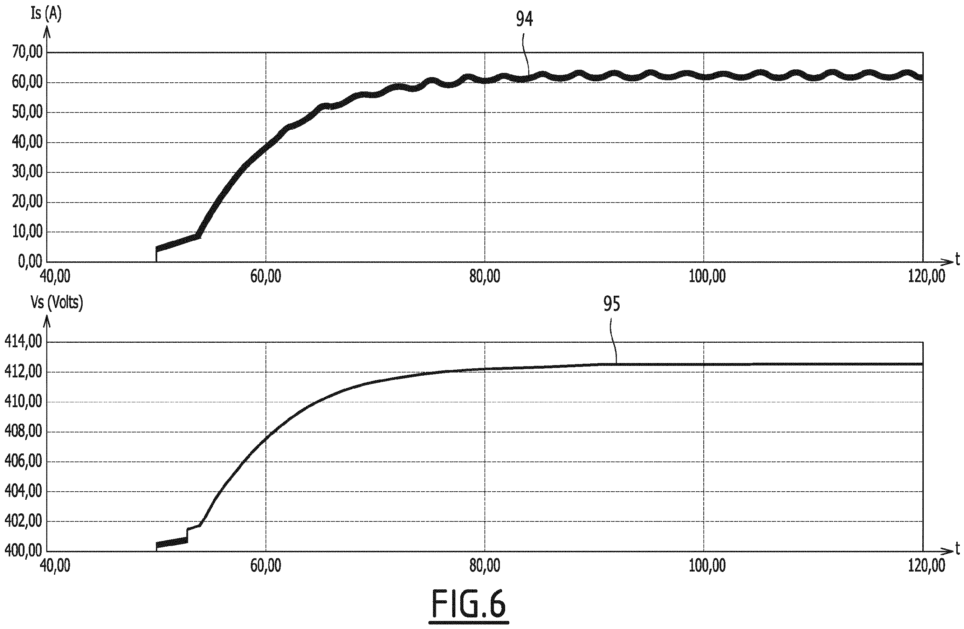

L'élément de conversion 18 est propre à convertir le courant alternatif du réseau 24 en un courant continu. L'élément de conversion 18 est propre à délivrer une tension continue de sortie Vs comprise entre 5 V et 1 kV, de préférence comprise entre 10 V et 500 V, et un courant continu de sortie Is compris entre 0 A et 250 A, de préférence entre 0 A et 125 A, comme représenté sur la figure 6. L'élément de conversion 18 présente une puissance de sortie de l'ordre de 50 kW. L'ondulation du courant de sortie Is est inférieure à 6 A en crête à crête.

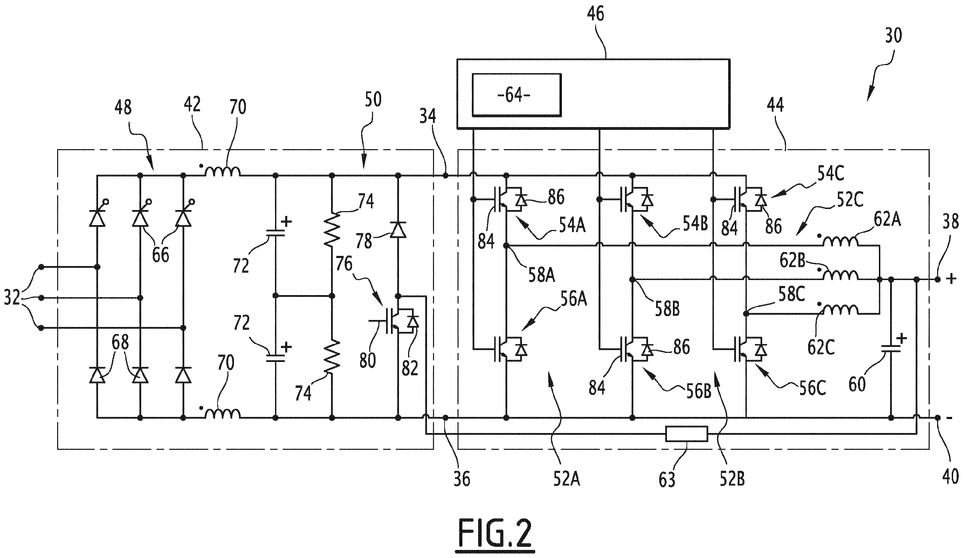

Selon un premier mode de réalisation, l'élément de conversion 18 est un convertisseur électrique 30, visible sur la figure 2. Le convertisseur électrique 30 comprend M bornes d'entrée 32, la ou chaque borne d'entrée 32 correspondant à une phase du réseau alternatif 24, une première 34 et une deuxième 36 bornes intermédiaires, une borne positive de sortie 38 et une borne négative de sortie 40. Dans l'exemple de réalisation de la figure 2, le convertisseur 30 comprend trois bornes d'entrée 32, le convertisseur 30 étant destiné à être relié au réseau triphasé 24.

Le convertisseur électrique 30 comprend un premier étage de conversion 42 connecté entre les bornes d'entrée 32 et les bornes intermédiaires 34, 36, un deuxième étage de conversion 44 connecté en sortie du premier étage 42, entre les bornes intermédiaires 34, 36 et les bornes de sortie 38, 40. Le convertisseur électrique 30 comprend également un organe 46 de commande du deuxième étage de conversion 44.

Le premier étage de conversion 42 comporte un redresseur de tension 48, propre à convertir la tension alternative d'entrée en une tension continue intermédiaire et à délivrer la tension continue intermédiaire aux première et deuxième bornes intermédiaires 34, 36.

En complément, le premier étage de conversion 42 comporte un filtre 50 connecté en sortie du redresseur de tension 48.

Le deuxième étage de conversion 44 comporte P branches de commutation 52A, 52B, 52C connectées entre les bornes intermédiaires 34, 36, P étant un nombre entier supérieur ou égal à 2, chaque branche de commutation 52A, 52B, 52C comportant un premier 54A, 54B, 54C et un deuxième 56A, 56B, 56C interrupteurs électroniques commandables, connectés en série et reliés entre eux par un point milieu 58A, 58B, 58C. Les branches de commutation 52A, 52B, 52C sont connectées en parallèle entre les bornes intermédiaires 34, 36.

Dans l'exemple de réalisation de la figure 2, P est égal à 3 et le deuxième étage de conversion 44 comprend une première 52A, une deuxième 52B et une troisième 52C branches de commutation. Par la suite, chaque référence comportant la lettre 'A' désigne un élément relatif à la première branche de commutation 52A, chaque référence comportant la lettre 'B' désigne un élément relatif à la deuxième branche de commutation 52B et chaque référence comportant la lettre 'C' désigne un élément relatif à la troisième branche de commutation 52C.

Le deuxième étage de conversion 44 comprend en outre un condensateur 60 connecté entre les deux bornes de sortie 38, 40 et, pour chaque branche de commutation 52A, 52B, 52C, une bobine électromagnétique 62A, 62B, 62C connectée entre le point milieu 58A, 58B, 58C de la branche de commutation 52A, 52B, 52C correspondante et la borne du condensateur 60 reliée à la borne positive de sortie 38.

En complément, le deuxième étage de conversion 44 comprend une résistance 63 de rebouclage connectée entre la borne positive de sortie 38 et le filtre 50, afin de contrôler la décharge du condensateur 60 connecté entre les deux bornes de sortie 38, 40.

Le deuxième étage de conversion 44 est réversible et est alors propre à faire circuler le courant depuis les bornes intermédiaires 34, 36 vers les bornes de sortie 38, 40, et de manière réversible depuis les bornes de sortie 38, 40 vers les bornes intermédiaires 34, 36.

L'organe de commande 46 comporte des moyens 64 de commande des interrupteurs électroniques 54A, 54B, 54C, 56A, 56B, 56C suivant une loi de commande.

Le redresseur de tension 48 est, par exemple, en forme d'un pont mixte de thyristors 66 et de diodes 68, chaque thyristor 66 étant disposé entre une borne d'entrée 32 correspondante et la première borne intermédiaire 34 et chaque diode 68 étant disposée entre une borne d'entrée 32 correspondante et la deuxième borne intermédiaire 36.

Le filtre 50 comporte deux bobines de filtrage 70 chacune étant connectée entre le redresseur de tension 48 et une borne intermédiaire 34, 36 correspondante. Le filtre 50 comprend également deux condensateurs de filtrage 72 connectés en série entre les bornes intermédiaires 34, 36 et deux résistances de filtrage 74, chacune étant connectée en parallèle d'un condensateur de filtrage 72 correspondant.

Le filtre 50 comprend un interrupteur électronique 76 et une diode 78 connectés en série entre les bornes intermédiaires 34, 36, l'interrupteur électronique 76 étant formé d'un transistor 80 et d'une diode 82 connectée en antiparallèle du transistor 80. La diode 78 est connectée dans le sens passant de la deuxième borne intermédiaire 36 vers la première borne intermédiaire 34.

Chaque premier interrupteur 54A, 54B, 54C est connecté entre la première borne intermédiaire 34 et le point milieu 58A, 58B, 58C correspondant, et chaque deuxième interrupteur 56A, 56B, 56C est connecté entre la deuxième borne intermédiaire 36 et le point milieu 58A, 58B, 58C correspondant.

Chaque interrupteur 54A, 54B, 54C, 56A, 56B, 56C comporte un élément semi-conducteur 84 et une diode 86 connectée en antiparallèle de l'élément semi-conducteur 84, chaque élément semi-conducteur 84 étant commutable entre un état passant et un état bloqué.

La résistance de rebouclage 63 est connectée entre, d'une part, la borne positive de sortie 38, et d'autre part, le point de connexion entre l'interrupteur électronique 76 et la diode 78 du filtre 50. La résistance de rebouclage permet de contrôler la décharge du condensateur 60 par commutation de l'interrupteur électronique 76 en vue de maintenir une tension constante en la borne positive de sortie 38.

Les moyens de commande 64 sont propres à commander les éléments semi-conducteurs 84 de chaque interrupteur suivant une loi de commande sélectionnée parmi une première loi de commande et une deuxième loi de commande.

La première loi de commande est telle que l'élément semi-conducteur 84 de chaque premier interrupteur 54A, 54B, 54C est toujours à l'état bloqué. La première loi de commande correspond à un premier mode de fonctionnement du deuxième étage de conversion 44. Autrement dit, selon la première loi de commande, pour chaque premier interrupteur 54A, 54B, 54C, le courant est propre à circuler uniquement à travers la diode 86 correspondante, celle-ci fonctionnant comme une diode de roue libre.

La deuxième loi de commande est telle que l'élément semi-conducteur 84 de chaque deuxième interrupteur 56A, 56B, 56C est toujours à l'état bloqué. La deuxième loi de commande correspond à un deuxième mode de fonctionnement du deuxième étage de conversion 44. Autrement dit, selon la deuxième loi de commande, pour chaque deuxième interrupteur 56A, 56B, 56C, le courant est propre à circuler uniquement à travers la diode 86, celle-ci fonctionnant comme une diode de roue libre.

La première loi de commande correspond à un fonctionnement Boost, et le deuxième étage de conversion 44 forme, dans son premier mode de fonctionnement, un convertisseur Boost propre à convertir la tension continue entre les bornes intermédiaires 34,36 en une autre tension continue de valeur plus élevée entre les bornes de sortie 38, 40.

La deuxième loi de commande correspond à un fonctionnement Buck, et le deuxième étage de conversion 44 forme, dans son deuxième mode de fonctionnement, un convertisseur Buck propre à convertir la tension continue entre les bornes intermédiaires 34,36 en une autre tension continue de plus faible valeur entre les bornes de sortie 38, 40. Le deuxième mode de fonctionnement est distinct du premier mode de fonctionnement.

Les moyens de commande 64 sont propres à commander les éléments semi-conducteurs 84 alternativement selon la première loi de commande et selon la deuxième loi de commande, tout en étant adapté pour passer de la première loi de commande à la deuxième loi de commande et inversement de la deuxième loi de commande à la première loi de commande, par exemple en fonction de la batterie électrique à charger, ou encore du sens du circulation du courant à travers le deuxième étage de conversion 44, le deuxième étage de conversion 44 étant réversible. Le deuxième étage de conversion 44 forme alors alternativement en convertisseur Boost et en convertisseur Buck.

Autrement dit, l'étage de conversion 44 est propre à sélectionner successivement la première loi de commande puis la deuxième loi de commande afin de passer d'un mode de fonctionnement en conversion Boost à un mode de fonctionnement en conversion Buck, ou bien propre à sélectionner successivement la deuxième loi de commande puis la première loi de commande afin de passer d'un mode de fonctionnement en conversion Buck à un mode de fonctionnement en conversion Boost.

En variante, les moyens de commande 64 sont propres à commander les éléments semi-conducteurs 84 seulement selon la première loi de commande, et le deuxième étage de conversion 44 forme seulement un convertisseur Boost.

En variante encore, les moyens de commande 64 sont propres à commander les éléments semi-conducteurs 84 seulement la deuxième loi de commande, et le deuxième étage de conversion 44 forme seulement un convertisseur Buck.

En complément, dans l'exemple de réalisation de la figure 2, les moyens de commande 64 sont propres à commander les interrupteurs électroniques 54A, 54B, 54C, 56A, 56B, 56C des branches de commutation 52A, 52B, 52C, chacune suivant une loi de commutation propre, et les lois de commutation sont décalées l'une de l'autre.

Les lois de commutation sont, par exemple, de même fréquence F et sont alors déphasées l'une de l'autre. Le déphasage entre les lois de commutation de chacune des branches 52A, 52B, 52C est, par exemple, égal à 360°/P, où P est le nombre de branches de commutation 52A, 52B, 52C. Autrement dit, dans l'exemple de réalisation de la figure 2, le déphasage entre les lois de commutation est égal à 120°.

L'homme du métier comprendra que le déphasage, exprimé ci-dessus en degrés, peut également être exprimé en radians, 2π radians étant égal à 360°.

L'homme du métier comprendra également que le déphasage entre les lois de commutation exprimé ci-dessus de manière angulaire peut également être exprimé de manière temporelle en divisant ledit déphasage exprimé en radians par une pulsation ω, la pulsation ω étant égale à 2π x F radians/s, où F est la fréquence des lois de commutation.

L'élément semi-conducteur 84 est par exemple un transistor, tel qu'un transistor bipolaire à grille isolée, également appelé transistor IGBT (de l'anglais *Insulated Gate Bipolar Transistor*). En variante, l'élément semi-conducteur 84 est un thyristor, tel qu'un thyristor GTO (de l'anglais *Gate Turn Off*).

Le fonctionnement de la borne de rechargement 10 va être à présent décrit.

Lorsqu'un utilisateur connecte le connecteur électrique 20 de la borne de rechargement avec le connecteur complémentaire de son véhicule automobile 14 afin de recharger la batterie électrique 12, l'élément de conversion 18 est alors relié à la batterie électrique 12, afin de lui délivrer un courant continu à partir du courant alternatif du réseau 24.

Le courant alternatif du réseau 24, présent au niveau des bornes d'entrée 32 de l'élément de conversion, est dans un premier temps converti en courant continu par le redresseur de tension 48 du premier étage de conversion, puis filtré par le filtre 50 dudit premier étage.

La tension continue présente au niveau des bornes intermédiaires 34, 36 est alors convertie par le deuxième étage de conversion 44 en une autre tension continue, celle-ci étant de valeur plus élevée que la tension continue entre les bornes intermédiaires 34, 36 lorsque le deuxième étage de conversion 44 est dans son premier mode de fonctionnement, ou bien de plus faible valeur que la tension continue entre les bornes intermédiaires 34, 36 lorsque le deuxième étage de conversion 44 est dans son deuxième mode de fonctionnement.

Pour ce faire, selon la première loi de commande, les moyens de commande 64 commandent cycliquement chacun des éléments semi-conducteurs 84 des deuxièmes interrupteurs 56A, 56B, 56C de l'état bloqué à l'état passant, puis de l'état passant à l'état bloqué, pendant que les éléments semi-conducteurs 84 des premiers interrupteurs 54A, 54B, 54C sont toujours à l'état bloqué. Selon la deuxième loi de commande, les moyens de commande 64 commandent cycliquement chacun des éléments semi-conducteurs 84 des premiers interrupteurs 54A, 54B, 54C de l'état bloqué à l'état passant, puis de l'état passant à l'état bloqué, pendant que les éléments semi-conducteurs 84 des deuxièmes interrupteurs 56A, 56B, 56C sont toujours à l'état bloqué.

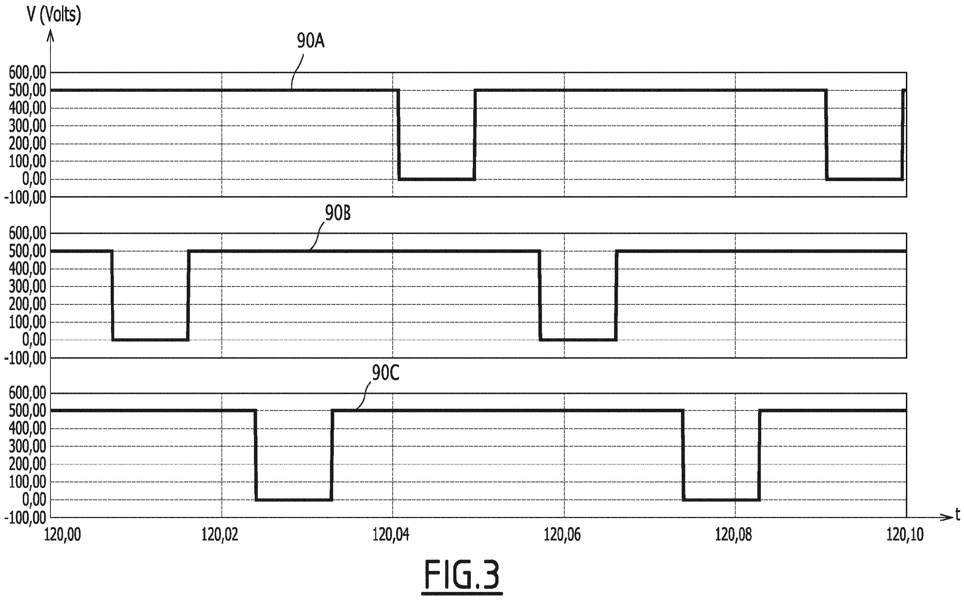

Le deuxième mode de fonctionnement du deuxième étage de conversion 44, également appelé mode Buck, va être décrit plus en détail ci-après à l'aide des figures 3 à 6.

La figure 3 illustre une première courbe 90A, une deuxième courbe 90B, une troisième courbe 90C, représentant la tension aux bornes du premier interrupteur 54A de la première branche, respectivement du premier interrupteur 54B de la deuxième branche et respectivement du premier interrupteur 54C de la troisième branche, selon le deuxième mode de fonctionnement du deuxième étage de conversion 44.

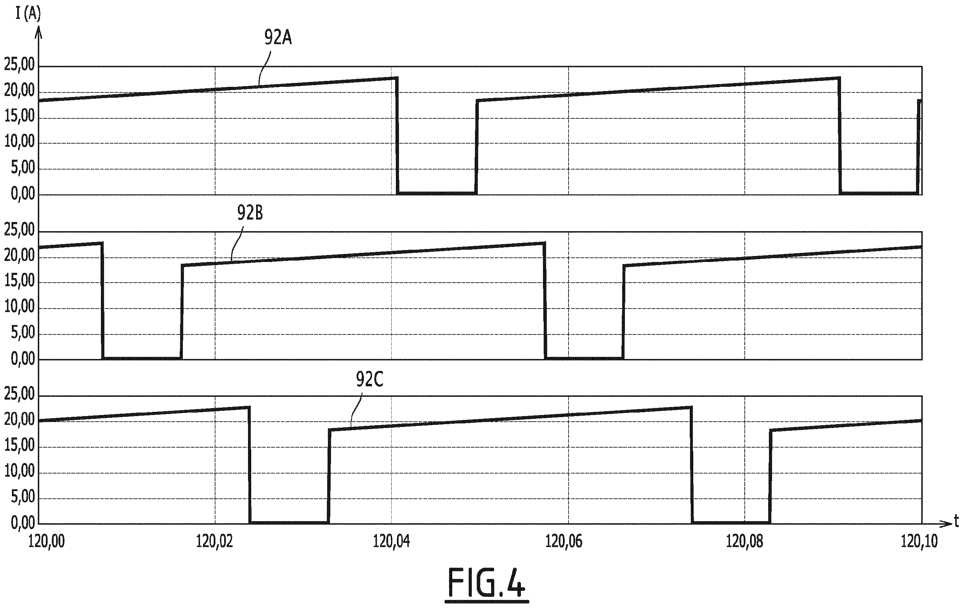

La figure 4 illustre une quatrième courbe 92A, une cinquième courbe 92B, une sixième courbe 92C, représentant le courant circulant dans l'élément semi-conducteur 84 du premier interrupteur 54A de la première branche, respectivement du premier interrupteur 54B de la deuxième branche et respectivement du premier interrupteur 54C de la troisième branche, selon le deuxième mode de fonctionnement du deuxième étage de conversion 44.

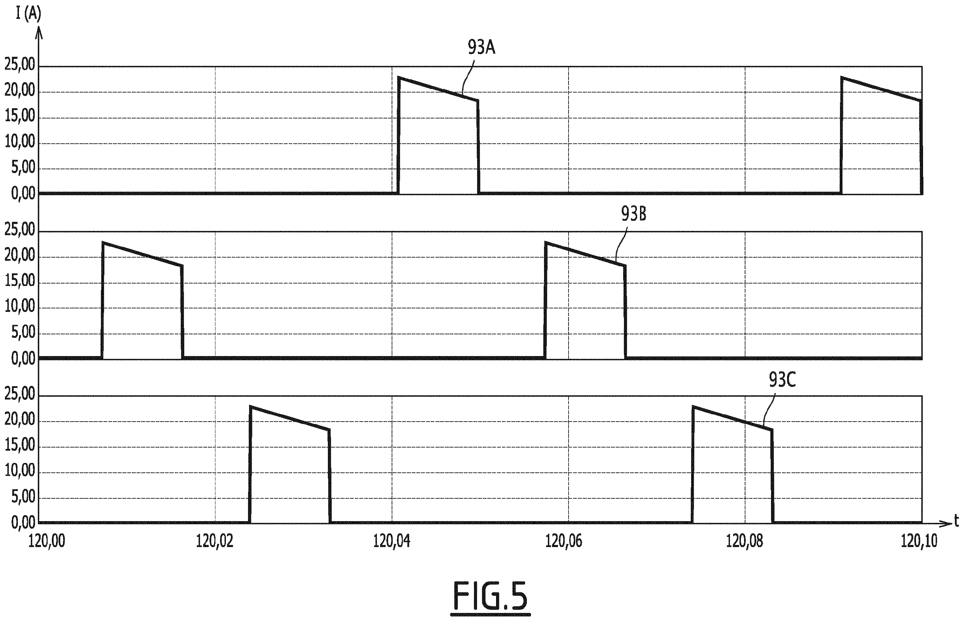

La figure 5 illustre une septième courbe 93A, une huitième courbe 93B, une neuvième courbe 93C, représentant le courant circulant dans la diode 86 du deuxième interrupteur 56A de la première branche, respectivement du deuxième interrupteur 56B de la deuxième branche et respectivement du deuxième interrupteur 56C de la troisième branche, selon le deuxième mode de fonctionnement du deuxième étage de conversion 44.

La figure 6 illustre enfin une dixième courbe 94 et une onzième courbe 95, représentant respectivement le courant Is et la tension Vs délivrés en sortie du convertisseur 30, suivant le deuxième mode de fonctionnement du deuxième étage de conversion 44.

Durant le deuxième mode de fonctionnement, dans l'état passant de l'élément semi-conducteur 84 d'un premier interrupteur 54A, 54B, 54C donné, ledit premier interrupteur 54A, 54B, 54C est en position fermée, comme représenté sur la figure 3 par les paliers hauts des courbes 90A, 90B, 90C, pour lesquels la valeur de la tension aux bornes du premier interrupteur 54A, 54B, 54C correspondant est d'environ 500 V et sensiblement constante.

La tension aux bornes de la bobine électromagnétique 62A, 62B, 62C correspondante augmente linéairement, comme représenté sur la figure 4 par les segments inclinés vers le haut des courbes 92A, 92B, 92C, pour lesquels la valeur du courant croît d'environ 18 A jusqu'à environ 23 A.

La tension aux bornes de la diode 86 du deuxième interrupteur 56A, 56B, 56B connecté en série avec ledit premier interrupteur 54A, 54B, 54C en position fermée est négative, et aucun courant ne traverse alors ladite diode 86, comme représenté sur la figure 5 par les paliers bas des courbes 93A, 93B, 93C, pour lesquels la valeur du courant est sensiblement nulle.

Durant le deuxième mode de fonctionnement, dans l'état bloqué de l'élément semi-conducteur 84 d'un premier interrupteur 54A, 54B, 54C donné, ledit premier interrupteur 54A, 54B, 54C est en position ouverte, comme représenté sur la figure 3 par les paliers bas des courbes 90A, 90B, 90C, pour lesquels la valeur de la tension aux bornes du premier interrupteur 54A, 54B, 54C correspondant est sensiblement nulle et constante.

La diode 86 du deuxième interrupteur 56A, 56B, 56C connecté en série avec ledit premier interrupteur 54A, 54B, 54C en position ouverte devient passante. Le courant circulant dans la bobine électromagnétique 62A, 62B, 62C correspondant décroît alors, comme représenté sur la figure 5 par les segments inclinés vers le bas des courbes 93A, 93B, 93C, pour lesquels la valeur du courant décroît d'environ 23 A jusqu'à environ 18 A.

L'ondulation de courant au niveau de chaque branche de commutation 52A, 52B, 52C est alors sensiblement égale à 5 A en crête à crête.

En complément, les lois de commutation des premiers interrupteurs 54A, 54B, 54C sont décalées les unes des autres, comme représenté sur la figure 3 où les paliers bas des courbes 90A, 90B, 90C sont décalés les uns des autres. Les périodes de croissance et de décroissance du courant dans chacune des bobines électromagnétiques 62A, 62B, 62C sont alors également décalées d'une bobine électromagnétique à l'autre.

Ce décalage des lois de commutation permet alors de limiter l'ondulation du courant continu délivré en sortie du convertisseur 30, comme représenté sur la figure 6. La courbe 94 montre que l'ondulation du courant de sortie Is est sensiblement égale à 3 A en crête à crête, ce qui est donc inférieur à l'ondulation du courant circulant dans chacune des bobines électromagnétiques 62A, 62B, 62C.

Dans l'exemple de réalisation des figures 3 à 6, le courant continu Is délivré en sortie du convertisseur 30 est légèrement supérieur à 60 A, et la tension continue est d'environ 413 V.

Ainsi, la connexion en parallèle des branches de commutation 52A, 52B, 52C et des bobines électromagnétiques 62A, 62B, 62C permet de délivrer un fort courant en sortie, de l'ordre de 100 A, pour une tension de l'ordre de 500 V, tout en ayant des éléments semi-conducteurs 84 et des bobines électromagnétiques 62A, 62B, 62C peu coûteux et peu encombrants. Le convertisseur électrique 30 selon l'invention présente un coût et un encombrement réduits.

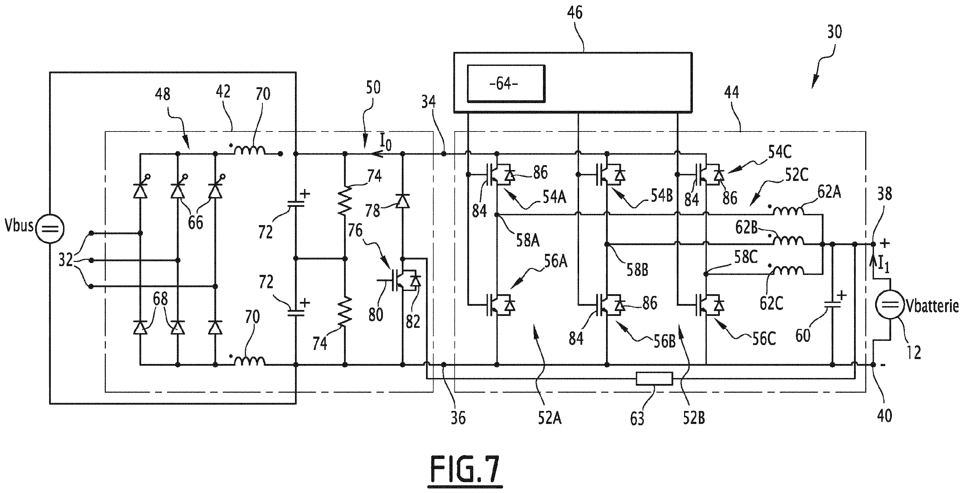

La figure 7 illustre le convertisseur électrique 30 selon une variante du premier mode de réalisation. Selon cette variante, seuls le deuxième étage de conversion 44 et le filtre 50 connecté en entrée du deuxième étage 44 sont mis en œuvre, le convertisseur 30 étant connecté, d'une part, à un bus de tension continue Vbus par les bornes intermédiaires 34, 36, et d'autre part, à la charge électrique à alimenter en tension continue, telle que la batterie 12 présentant la tension continue Vbatterie, par les bornes de sortie 38, 40. Selon cette variante, le deuxième étage de conversion 44 et le filtre 50 sont propres à fonctionner de manière réversible, le courant étant propre à circuler depuis le bus de tension continue vers la charge électrique, ou inversement depuis la charge électrique vers le bus de tension continue.

L'homme du métier comprendra que plusieurs convertisseurs électriques 30 selon cette variante sont susceptibles d'être connectés en parallèle les uns des autres au même bus de tension continue. Autrement dit, plusieurs ensembles de deuxième étage de conversion 44 et de filtre 50 sont susceptibles d'être connectés en sortie d'un unique redresseur de tension propre à délivrer une tension continue au bus de tension continue Vbus, à partir d'une tension alternative.

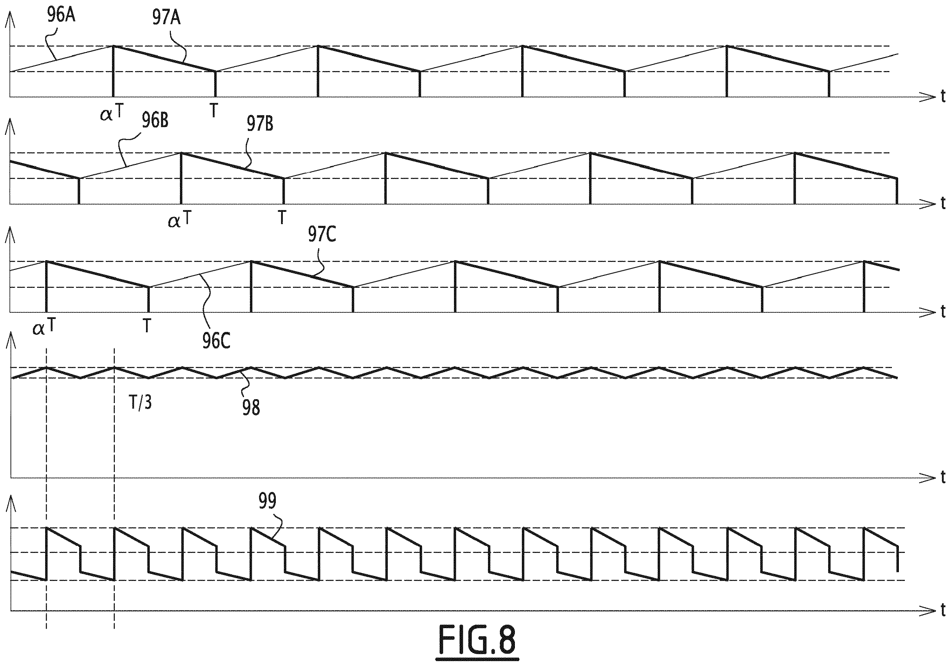

Le premier mode de fonctionnement du deuxième étage de conversion 44, également appelé mode Boost, va être décrit plus en détail ci-après à l'aide de la figure 8.

La figure 8 illustre une douzième courbe 96A, une treizième courbe 96B, une quatorzième courbe 96C, représentant le courant circulant dans l'élément semi-conducteur 84 du deuxième interrupteur 56A de la première branche, respectivement du deuxième interrupteur 56B de la deuxième branche et respectivement du deuxième interrupteur 56C de la troisième branche, selon le premier mode de fonctionnement du deuxième étage de conversion 44. Les courbes 96A, 96B, 96C sont représentées en traits fins.

La figure 8 illustre également une quinzième courbe 97A, une seizième courbe 97B, une dix-septième courbe 97C, représentant le courant circulant dans la diode 86 du premier interrupteur 54A de la première branche, respectivement du premier interrupteur 54B de la deuxième branche et respectivement du premier interrupteur 54C de la troisième branche, selon le premier mode de fonctionnement du deuxième étage de conversion 44. Les courbes 97A, 97B, 97C sont représentées en traits épais.

La figure 8 illustre enfin une dix-huitième courbe 98 et une dix-neuvième courbe 99, représentant le courant I1 circulant à travers la charge, telle que la batterie 12, connectée en sortie du convertisseur 30, et respectivement le courant I1 circulant en entrée du convertisseur 30 , suivant le premier mode de fonctionnement du deuxième étage de conversion 44, les courants I1 et I0 étant représentés sur la figure 7.

Le fonctionnement d'un convertisseur Boost, c'est-à-dire le premier mode de fonctionnement du deuxième étage de conversion 44, est connu en soi, et n'est pas décrit plus en détail.

En complément, les lois de commutation des deuxièmes interrupteurs 56A, 56B, 56C sont décalées les unes des autres. Les périodes de croissance et de décroissance du courant dans chacune des bobines électromagnétiques 62A, 62B, 62C sont alors également décalées d'une bobine électromagnétique à l'autre.

Ce décalage des lois de commutation permet alors de limiter l'ondulation du courant continu délivré en sortie du convertisseur 30, comme représenté sur la figure 8. La courbe 98 montre que l'ondulation du courant de sortie Is est de faible amplitude.

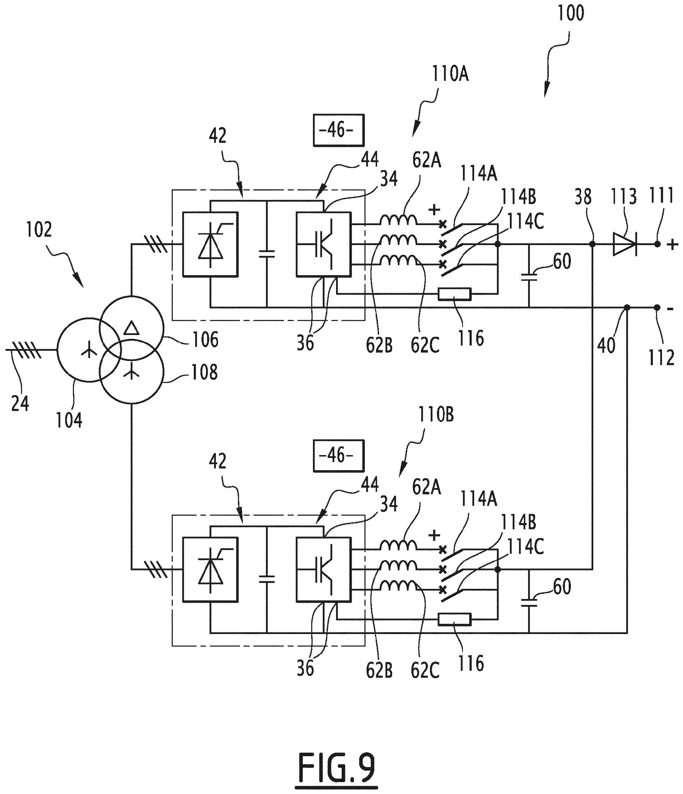

La figure 9 illustre un deuxième mode de réalisation de l'invention pour lequel les éléments analogues au premier mode de réalisation, décrits précédemment, sont repérés par des références identiques, et ne sont donc pas décrits à nouveau.

Selon le deuxième mode de réalisation, l'élément de conversion 18 est un dispositif de conversion 100 comprenant un transformateur de tension 102 comportant un circuit primaire 104, un premier circuit secondaire 106 et un deuxième circuit secondaire 108.

Le dispositif de conversion 100 comprend un premier convertisseur électrique 110A connecté au premier circuit secondaire 106 et un deuxième convertisseur électrique 110B connecté au deuxième circuit secondaire 108.

Le dispositif de conversion 100 comprend également une borne positive de sortie 111, une borne négative de sortie 112 et une diode 113 connectée entre les bornes positives de sortie 38 des convertisseurs 110A, 110B et la borne positive de sortie 111. Les bornes positives de sortie 38 du premier convertisseur 110A et du deuxième convertisseur 110B sont reliées entre elles. Les bornes négatives de sortie 40 du premier convertisseur 110A et du deuxième convertisseur 110B sont également reliées entre elles.

Le circuit primaire 104 du transformateur comporte M enroulements primaires, non représentés, où M est le nombre de phases du réseau alternatif 24.

Chaque circuit secondaire 106, 108 du transformateur comporte M enroulements secondaires, non représentés. À

Dans l'exemple de réalisation de la figure 9, le réseau alternatif 24 est un réseau triphasé, M est égal à trois, et les trois enroulements primaires sont connectés en étoile. Les trois enroulements secondaires du premier circuit secondaire 106 sont connectés en triangle, et les trois enroulements secondaires du deuxième circuit secondaire 108 sont connectés en étoile.

Chaque convertisseur électrique 110A, 110B comprend, de manière identique au premier mode de réalisation, un premier étage de conversion 42, un deuxième étage de conversion 44 connecté en sortie du premier étage 42 et un organe de commande 46.

Le premier convertisseur électrique 110A est, par exemple, identique au deuxième convertisseur électrique 110B.

En complément, le deuxième étage de conversion 44 de chaque convertisseur 110A, 110B comprend, pour chaque branche de commutation 52A, 52B, 52C, un disjoncteur 114A, 114B, 114C connecté entre la bobine 62A, 62B, 62C correspondante et le condensateur 60.

En complément, le deuxième étage de conversion 44 de chaque convertisseur 110A, 110B comprend une résistance 116 de rebouclage connectée entre, d'une part, la sortie des disjoncteurs 114A, 114B, 114C, et d'autre part, de manière analogue au premier mode de réalisation, le point de connexion entre l'interrupteur électronique 76 et la diode 78 du filtre 50. La résistance de rebouclage permet de contrôler la décharge du condensateur 60 par commutation de l'interrupteur électronique 76 en vue de maintenir une tension constante en la borne positive de sortie 38.

Le fonctionnement de ce deuxième mode de réalisation est analogue à celui du premier mode de réalisation, décrit précédemment, et n'est pas décrit à nouveau.

Les avantages de ce deuxième mode de réalisation sont analogues à ceux du premier mode de réalisation, décrits précédemment.

Le dispositif de conversion 100 selon le deuxième mode de réalisation permet en outre d'améliorer la qualité d'énergie absorbée au niveau du réseau électrique 24 de par l'association en parallèle du premier convertisseur 110A et du deuxième convertisseur 110B via les deux circuits secondaires 106, 108 du transformateur 102. Le dispositif de conversion 100 permet alors de limiter le taux de distorsion harmonique vu du réseau alternatif 24 et d'obtenir une meilleure qualité d'énergie absorbée.

On conçoit ainsi que l'élément de conversion 18 selon l'invention permet de réduire le coût et l'encombrement, tout en permettant le passage de forts courants, tels que des courants de l'ordre de 100 A.

L'homme du métier comprendra également que le deuxième étage de conversion 44 est propre à fonctionner alternativement en conversion Boost et en conversion Buck selon la loi de commande sélectionnée parmi la première loi de commande et la deuxième loi de commande.

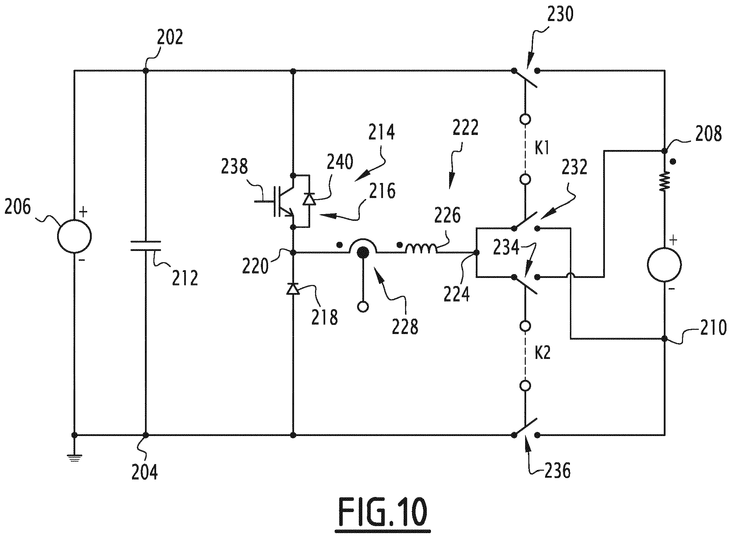

La figure 10 illustre un schéma électrique d'un autre élément de conversion propre à passer également d'un mode de fonctionnement Boost à un mode de fonctionnement Buck, et inversement, le passage d'une conversion Boost à une conversion Buck et inversement s'effectuant dans ce cas par commutation de deux contacteurs, au lieu d'un changement de loi de commande, de la première loi de commande à la deuxième, et inversement de la deuxième loi de commande à la première loi de commande, comme cela a été décrit précédemment.

Sur la figure 10, l'élément de conversion 200 comprend deux bornes d'entrée 202, 204, à savoir une première borne d'entrée 202 et une deuxième borne d'entrée 204, propres à être reliées à une source de tension continue 206 et deux bornes de sortie 208, 210, à savoir une première borne de sortie 208 et une deuxième borne de sortie 210, entre lesquelles une tension continue de sortie est propre à être délivrée par l'élément de conversion 200.

L'élément de conversion 200 comprend un condensateur de filtrage 212 connecté entre les deux bornes d'entrée 202, 204.

L'élément de conversion 200 comprend également une branche de commutation 214 connectée en parallèle du condensateur de filtrage 212, c'est-à-dire entre les deux bornes d'entrée 202, 204, la branche de commutation 214 comportant un interrupteur commandable 216 et une diode 218 connectés en série et reliés entre eux par un point milieu 220.

L'élément de conversion 200 comprend une branche transversale 222 connectée entre le point milieu 220 et un point intermédiaire 224, la branche transversale 222 comportant une bobine électromagnétique 226. En complément, la branche transversale 222 comporte un capteur de courant 228.

L'élément de conversion 200 comprend un premier contacteur K1 et un deuxième contacteur K2, les premier et deuxième contacteurs K1, K2 étant couplés de telle sorte que le premier contacteur K1 est en position fermée lorsque le deuxième contacteur K2 est en position ouverte, et inversement le premier contacteur K1 est en position ouverte lorsque le deuxième contacteur K2 est en position fermée.

Le premier contacteur K1 comporte un premier interrupteur 230 et un deuxième interrupteur 232, propres à être commandés simultanément en position ouverte, ou bien en position fermée correspondant au passage du courant à travers les deux interrupteurs 230, 232. Le premier interrupteur 230 est connecté entre la première borne d'entrée 202 et la première borne de sortie 208, et le deuxième capteur de 132 est connecté entre le point intermédiaire 224 et la deuxième borne de sortie 210.

Le deuxième contacteur K2 comportent un troisième interrupteur 234 et un quatrième interrupteur 236, propres à être commandés simultanément en position ouverte, ou bien en position fermée correspondant au passage du courant à travers les deux interrupteurs 234, 236. Le troisième interrupteur 234 est connecté entre le point intermédiaire 224 et la première borne de sortie 208, et le quatrième interrupteur 236 est connecté entre la deuxième borne d'entrée 204 et la deuxième borne de sortie 210.

La fermeture du premier contacteur K1, c'est-à-dire la fermeture des premier et deuxième interrupteurs 230, 232, correspond à un mode de fonctionnement en convertisseur Boost de l'élément de conversion 200. La fermeture du deuxième contacteur K2, c'est-à-dire la fermeture des troisième et quatrième interrupteurs 234, 236, correspond à un mode de fonctionnement en convertisseur Buck de l'élément de conversion 200.

L'élément de conversion 200 est alors propre à passer simplement d'une conversion Boost à une conversion Buck par ouverture du premier contacteur K1 et fermeture du deuxième contacteur K2, et inversement d'une conversion Buck à une conversion Boost par fermeture du premier contacteur K1 et ouverture du deuxième contacteur K2.

L'interrupteur commandable 216 comporte un élément semi-conducteur 238 et une diode 240 connectée en antiparallèle de l'élément semi-conducteur 238, l'élément semi-conducteur 238 étant commutable entre un état passant et un état bloqué.

L'élément semi-conducteur 238 est par exemple un transistor, tel qu'un transistor bipolaire à grille isolée, également appelé transistor IGBT (de l'anglais *Insulated Gate Bipolar Transistor*). En variante, l'élément semi-conducteur 238 est un thyristor, tel qu'un thyristor GTO (de l'anglais *Gate Turn Off*).

## Revendications

1. Etage de conversion électrique (44), propre à être connecté, d'une part, à des bornes intermédiaires (34, 36) d'un bus électrique de tension continue, et d'autre part, à des bornes de sortie (38, 40), l'étage de conversion (44) comprenant :
- P branches de commutation, P étant supérieur ou égal à 2, de préférence égal à 3, les branches de commutation (52A, 52B, 52C) étant connectées en parallèle entre les bornes intermédiaires (34, 36), chaque branche de commutation (52A, 52B, 52C) comportant un premier (54A, 54B, 54C) et un deuxième (56A, 56B, 56C) interrupteurs électroniques commandables connectés en série et reliés entre eux par un point milieu (58A, 58B, 58C), le premier interrupteur (54A, 54B, 54C) étant connecté entre la première borne intermédiaire (34) et le point milieu (58A, 58B, 58C) correspondant, et le deuxième interrupteur (56A, 56B, 56C) étant connecté entre la deuxième borne intermédiaire (36) et le point milieu (58A, 58B, 58C) correspondant, chaque interrupteur (54A, 54B, 54C, 56A, 56B, 56C) comportant un élément semi-conducteur (84) et une diode (86) connectée en antiparallèle de l'élément semi-conducteur (84), chaque élément semi-conducteur (84) étant commutable entre un état passant et un état bloqué,
- des moyens (64) de commande des interrupteurs électroniques (54A, 54B, 54C, 56A, 56B, 56C) suivant une loi de commande,
**caractérisé en ce que** l'étage de conversion (44) comprend en outre un condensateur (60) connecté entre les deux bornes de sortie (38, 40) et, pour chaque branche de commutation (52A, 52B, 52C), une bobine électromagnétique (62A, 62B, 62C) connectée entre une borne du condensateur (60) et le point milieu (58A, 58B, 58C) de la branche de commutation correspondante, et
**en ce que** la loi de commande est sélectionnée parmi une première loi de commande et une deuxième loi de commande, la première loi de commande étant telle que l'élément semi-conducteur (84) de chaque premier interrupteur (54A, 54B, 54C) est toujours à l'état bloqué, et la deuxième loi de commande étant telle que l'élément semi-conducteur (84) de chaque deuxième interrupteur (56A, 56B, 56C) est toujours à l'état bloqué.

2. Etage de conversion (44) selon la revendication 1, dans lequel la première loi de commande est telle que l'élément semi-conducteur (84) de chaque deuxième interrupteur (56A, 56B, 56C) est commandé cycliquement de l'état bloqué à l'état passant, puis de l'état passant à l'état bloqué.

3. Etage de conversion (44) selon la revendication 1 ou 2, dans lequel la deuxième loi de commande est telle que l'élément semi-conducteur (84) de chaque premier interrupteur (54A, 54B, 54C) est commandé cycliquement de l'état bloqué à l'état passant, puis de l'état passant à l'état bloqué.

4. Etage de conversion (44) selon l'une quelconque des revendications précédentes, dans lequel l'étage de conversion forme selon la première loi de commande un convertisseur Boost propre à convertir une tension continue entre les bornes intermédiaires (34, 36) en une autre tension continue de valeur plus élevée, entre les bornes de sortie (38, 40), et/ou l'étage de conversion forme selon la deuxième loi de commande un convertisseur Buck propre à convertir la tension continue entre les bornes intermédiaires (34, 36) en une autre tension continue de plus faible valeur, entre les bornes de sortie (38, 40).

5. Etage de conversion (44) selon l'une quelconque des revendications précédentes, dans lequel l'étage de conversion (44) est propre à sélectionner successivement la première loi de commande puis la deuxième loi de commande afin de passer d'un mode de fonctionnement en conversion Boost à un mode de fonctionnement en conversion Buck, ou bien successivement la deuxième loi de commande puis la première loi de commande afin de passer d'un mode de fonctionnement en conversion Buck à un mode de fonctionnement en conversion Boost.

6. Etage de conversion (44) selon l'une quelconque des revendications précédentes, dans lequel les moyens de commande (64) sont propres à commander les interrupteurs électroniques (54A, 54B, 54C, 56A, 56B, 56C) des branches de commutation (52A, 52B, 52C), chacune suivant une loi de commutation, et les lois de commutation des branches de commutation (52A, 52B, 52C) sont décalées l'une de l'autre.

7. Etage de conversion (44) selon la revendication 6, dans lequel les lois de commutation de chacune des branches (52A, 52B, 52C) sont de même fréquence (F) et sont déphasées l'une de l'autre, le déphasage entre les lois de commutation de chacune des branches (52A, 52B, 52C) étant de préférence égal à 360°/P.

8. Convertisseur électrique (30 ; 110A, 110B), propre à être relié à un réseau électrique alternatif (24) comportant M phase(s), M étant supérieur ou égal à 1, le convertisseur (30 ; 110A, 110B) comprenant :
- M borne(s) d'entrée (32), la ou chaque borne d'entrée (32) correspondant à une phase du réseau alternatif (24), une première (34) et une deuxième (36) bornes intermédiaires, et deux bornes de sortie (38, 40),
- un premier étage de conversion (42), relié aux bornes d'entrée (32) et comportant un redresseur de tension (48) propre à convertir la tension alternative d'entrée en une tension continue intermédiaire délivrée entre les première et deuxième bornes intermédiaires (34, 36), et
- un deuxième étage de conversion (44), connecté aux bornes intermédiaires (34, 36) en sortie du premier étage de conversion (42)
**caractérisé en ce que** le deuxième étage de conversion (44) est conforme à l'une quelconque des revendications précédentes.

9. Convertisseur (30; 110A, 110B) selon la revendication 8, dans lequel le convertisseur (30 ; 110A, 110B) comprend en outre une liaison (63 ; 116) de rebouclage connectée entre l'une (38) des deux bornes de sortie et un filtre (50), le filtre (50) étant connecté en sortie du redresseur de tension (48), la liaison de rebouclage (63 ; 116) permettant de contrôler la décharge du condensateur (60) connecté entre les deux bornes de sortie (38, 40).

10. Dispositif (100) de conversion d'un courant alternatif en un courant continu, le dispositif de conversion (100) étant propre à être relié à un réseau électrique alternatif (24) comportant M phase(s), M étant supérieur ou égal à 1, le dispositif de conversion (100) comprenant :
- un transformateur de tension (102) comprenant un circuit primaire (104) comportant M enroulement(s) primaire(s), un premier (106) et un deuxième (108) circuits secondaires comportant chacun M enroulement(s) secondaire(s),
- un premier convertisseur électrique (110A) connecté au premier circuit secondaire (106), et
- un deuxième convertisseur électrique (110B) connecté au deuxième circuit secondaire (108),
**caractérisé en ce que** les premier et deuxième convertisseurs électriques (110A, 110B) sont chacun conformes à la revendication 8 ou 9.

11. Dispositif (100) selon la revendication 10, dans lequel M est égal à 3, les trois enroulements primaires sont connectés en étoile, les trois enroulements secondaires du premier circuit secondaire (106) sont connectés en triangle, et les trois enroulements secondaires du deuxième circuit secondaire (108) sont connectés en étoile.

12. Borne (10) de rechargement d'une batterie électrique (12), notamment d'une batterie électrique (12) de véhicule automobile (14), comprenant un boitier (16) et un connecteur électrique (20) destiné à être relié électriquement à la batterie (12),
**caractérisée en ce qu'**elle comprend un élément de conversion (18) parmi un convertisseur électrique (30; 110A, 110B) conforme à la revendication 8 ou 9 et un dispositif de conversion (100) conforme à la revendication 10 ou 11, l'élément de conversion (18) étant disposé dans le boîtier (16).

13. Borne de rechargement (10) selon la revendication 12, dans laquelle la borne (10) comprend en outre un câble de liaison électrique (22), agencé au moins partiellement à l'extérieur du boîtier (16) et reliant le connecteur électrique (20) à l'élément de conversion (18).

## Patentansprüche

1. Elektrische Wandlerstufe (44), die geeignet ist, um einerseits mit Zwischenklemmen (34, 36) eines elektrischen Gleichspannungsbusses und andererseits mit Ausgangsklemmen (38, 40) verbunden zu sein, die Wandlerstufe (44) umfassend:
- P Schaltzweige, wobei P größer als oder gleich wie 2, vorzugsweise gleich wie 3 ist, wobei die Schaltzweige (52A, 52B, 52C) parallel zwischen die Zwischenklemmen (34, 36) geschaltet sind, jeder Schaltzweig (52A, 52B, 52C) umfassend einen ersten (54A, 54B, 54C) und einen zweiten (56A, 56B, 56C) steuerbaren elektronischen Schalter, die in Reihe geschaltet sind und durch einen Mittelpunkt (58A, 58B, 58C) miteinander verbunden sind, wobei der erste Schalter (54A, 54B, 54C) zwischen der ersten Zwischenklemme (34) und dem entsprechenden Mittelpunkt (58A, 58B, 58C) verbunden ist und der zweite Schalter (56A, 56B, 56C) zwischen der zweiten Zwischenklemme (36) und dem entsprechenden Mittelpunkt (58A, 58B, 58C) verbunden ist, jeder Schalter (54A, 54B, 54C, 56A, 56B, 56C) umfassend ein halbleitendes Element (84) und eine Diode (86), die antiparallel zu dem halbleitenden Element (84) geschaltet ist, wobei jedes halbleitende Element (84) zwischen einem durchgehenden Zustand und einem gesperrten Zustand geschaltet werden kann,
- Einrichtungen (64) zum Steuern elektronischer Schalter (54A, 54B, 54C, 56A, 56B, 56C) gemäß einer Steuerregel,
**dadurch gekennzeichnet, dass** die Wandlerstufe (44) ferner einen Kondensator (60), der zwischen den zwei Ausgangsklemmen (38, 40) verbunden ist, und für jeden Schaltzweig (52A, 52B, 52C) eine elektromagnetische Spule (62A, 62B, 62C) umfasst, die zwischen einer Klemme des Kondensators (60) und dem Mittelpunkt (58A, 58B, 58C) des entsprechenden Schaltzweigs verbunden ist, und,
dass die Steuerregel aus einer ersten Steuerregel ausgewählt ist und einer zweiten Steuerregel, wobei die erste Steuerregel derart ist, dass das halbleitende Element (84) von jedem ersten Schalter (54A, 54B, 54C) immer in dem gesperrten Zustand ist, und die zweite Steuerregel derart ist, dass das halbleitende Element (84) von jedem zweiten Schalter (56A, 56B, 56C) immer in dem gesperrten Zustand ist.

2. Wandlerstufe (44) nach Anspruch 1, wobei die erste Steuerregel derart ist, dass das halbleitende Element (84) von jedem zweiten Schalter (56A, 56B, 56C) zyklisch von dem gesperrten Zustand in den durchgehenden Zustand und dann von dem durchgehenden Zustand in den gesperrten Zustand gesteuert wird.

3. Wandlerstufe (44) nach Anspruch 1 oder 2, wobei die zweite Steuerregel derart ist, dass das halbleitende Element (84) von jedem ersten Schalter (54A, 54B, 54C) zyklisch von dem gesperrten Zustand in den durchgehenden Zustand und dann von dem durchgehenden Zustand in den gesperrten Zustand gesteuert wird.

4. Wandlerstufe (44) nach einem der vorherigen Ansprüche, wobei die Wandlerstufe gemäß der ersten Steuerregel einen Boost-Wandler bildet, der geeignet ist, um eine Gleichspannung zwischen den Zwischenklemmen (34, 36) in eine andere Gleichspannung mit höherem Wert zwischen den Ausgangsklemmen (38, 40) umzuwandeln, und/oder die Wandlerstufe gemäß der zweiten Steuerregel einen Buck-Wandler bildet, der geeignet ist, um die Gleichspannung zwischen den Zwischenklemmen (34, 36) in eine andere Gleichspannung mit geringerem Wert zwischen den Ausgangsklemmen (38, 40) umzuwandeln.

5. Wandlerstufe (44) nach einem der vorherigen Ansprüche, wobei die Wandlerstufe (44) geeignet ist, um nacheinander die erste Steuerregel und dann die zweite Steuerregel auszuwählen, um von einer Betriebsart mit Boost-Umwandlung auf eine Betriebsart mit Buck-Umwandlung umzuschalten, oder, um nacheinander die zweite Steuerregel und dann die erste Steuerregel auszuwählen, um von einer Betriebsart mit Buck-Umwandlung auf eine Betriebsart mit Boost-Umwandlung umzuschalten.

6. Wandlerstufe (44) nach einem der vorherigen Ansprüche, wobei die Steuereinrichtungen (64) geeignet sind, um die elektronischen Schalter (54A, 54B, 54C, 56A, 56B, 56C) der Schaltzweige (52A, 52B, 52C) jeweils gemäß einer Schaltregel zu steuern, und die Schaltregeln der Schaltzweige (52A, 52B, 52C) voneinander versetzt sind.

7. Wandlerstufe (44) nach Anspruch 6, wobei die Schaltregeln von jedem der Zweige (52A, 52B, 52C) die gleiche Frequenz (F) aufweisen und voneinander phasenverschoben sind, wobei die Phasenverschiebung zwischen den Schaltregeln von jedem der Zweige (52A, 52B, 52C) vorzugsweise gleich wie 360°/P ist.

8. Elektrischer Wandler (30; 110A, 110B), der geeignet ist, um mit einem elektrischen Wechselstromnetz (24) verbunden zu werden, umfassend M Phase(n), wobei M größer als oder gleich wie 1 ist, der Wandler (30; 110A, 110B) umfassend:
- M Eingangsklemme(n) (32), wobei die oder jede Eingangsklemme (32) einer Phase des Wechselstromnetzes (24) entspricht, eine erste (34) und eine zweite (36) Zwischenklemme, und zwei Ausgangsklemmen (38, 40),
- eine erste Wandlerstufe (42), die mit den Eingangsklemmen (32) verbunden ist und umfassend einen Spannungsgleichrichter (48), der geeignet ist, um die Eingangswechselspannung in eine Zwischengleichspannung umzuwandeln, die zwischen der ersten und der zweiten Zwischenklemme (34, 36) bereitgestellt wird, und
- eine zweite Wandlerstufe (44), die mit den Zwischenklemmen (34, 36) am Ausgang der ersten Wandlerstufe (42) verbunden ist,
**dadurch gekennzeichnet, dass** die zweite Wandlerstufe (44) nach einem der vorherigen Ansprüche ist.

9. Wandler (30; 110A, 110B) nach Anspruch 8, wobei der Wandler (30; 110A, 110B) ferner eine Rückkopplungsverbindung (63; 116) umfasst, die zwischen einer (38) der zwei Ausgangsklemmen und einem Filter (50) verbunden ist, wobei der Filter (50) an dem Ausgang des Spannungsgleichrichters (48) verbunden ist, wobei die Rückkopplungsverbindung (63; 116) es ermöglicht, die Entladung des Kondensators (60) zu steuern, der zwischen den zwei Ausgangsklemmen (38, 40) verbunden ist.

10. Vorrichtung (100) zum Umwandeln eines Wechselstroms in einen Gleichstrom, wobei die Wandlervorrichtung (100) geeignet ist, um mit einem Wechselstromnetz (24) umfassend M Phase(n) verbunden zu werden, wobei M größer als oder gleich wie 1 ist, die Wandlervorrichtung (100) umfassend:
- einen Spannungstransformator (102), umfassend einen Primärkreis (104) umfassend M Primärwicklung(en), einen ersten (106) und einen zweiten (108) Sekundärkreis mit jeweils M Sekundärwicklung(en),
- einen ersten elektrischen Wandler (110A), der mit der ersten Sekundärschaltung (106) verbunden ist, und
- einen zweiten elektrischen Wandler (110B), der mit der zweiten Sekundärschaltung (108) verbunden ist,
**dadurch gekennzeichnet, dass** der erste und der zweite elektrische Wandler (110A, 110B) jeweils Anspruch 8 oder 9 entsprechen.

11. Vorrichtung (100) nach Anspruch 10, wobei M gleich wie 3 ist, die drei Primärwicklungen sternförmig verbunden sind, die drei Sekundärwicklungen des ersten Sekundärkreises (106) dreieckförmig verbunden sind und die drei Sekundärwicklungen des zweiten Sekundärkreises (108) sternförmig verbunden sind.

12. Säule (10) zum Laden einer elektrischen Batterie (12), insbesondere einer elektrischen Batterie (12) eines Kraftfahrzeugs (14), umfassend ein Gehäuse (16) und einen elektrischen Verbinder (20), der dazu bestimmt ist, elektrisch mit der Batterie (12) verbunden zu werden,
**dadurch gekennzeichnet, dass** sie ein Wandlerelement (18) aus einem elektrischen Wandler (30; 110A, 110B) gemäß Anspruch 8 oder 9 und einer Wandlervorrichtung (100) gemäß Anspruch 10 oder 11 umfasst, wobei das Wandlerelement (18) in dem Gehäuse (16) angeordnet ist.

13. Säule (10) nach Anspruch 12, wobei die Säule (10) ferner ein elektrisches Verbindungskabel (22) umfasst, das zumindest teilweise außerhalb des Gehäuses (16) angeordnet ist und den elektrischen Verbinder (20) mit dem Wandlerelement (18) verbindet.

## Claims

1. An electrical conversion stage (44), suitable for being connected, on the one hand, to intermediate terminals (34, 36) of an electrical DC voltage bus, and on the other hand, to output terminals (38, 40), the conversion stage (44) comprising:
- P switching branches, P being greater than or equal to 2, preferably equal to 3, the switching branches (52A, 52B, 52C) being connected in parallel between the intermediate terminals (34, 36), each switching branch (52A, 52B, 52C) comprising a first (54A, 54B, 54C) and a second (56A, 56B, 56C) series-connected controllable electronic switch linked together by a midpoint (58A, 58B, 58C), the first switch (54A, 54B, 54C) being connected between the first intermediate terminal (34) and the corresponding midpoint (58A, 58B, 58C), and the second switch (56A, 56B, 56C) being connected between the second intermediate terminal (36) and the corresponding midpoint (58A, 58B, 58C) each switch (54A, 54B, 54C, 56A, 56B, 56C) comprising a semiconductor element (84) and a diode (86) connected in antiparallel to the semiconductor element (84), each semiconductor element (84) being switchable between an on state and an off state,
- means (64) for controlling the electronic switches (54A, 54B, 54C, 56A, 56B, 56C) according to a control law,
**characterised in that** the conversion stage (44) further comprises a capacitor (60) connected between the two output terminals (38, 40) and, for each switching branch (52A, 52B, 52C), an electromagnetic coil (62A, 62B, 62C) connected between one terminal of the capacitor (60) and the midpoint (58A, 58B, 58C) of the corresponding switching branch, and
**in that** the control law is selected from a first control law and a second control law, the first control law being such that the semiconductor element (84) of each first switch (54A, 54B, 54C) is always in the off state, and the second control law being such that the semiconductor element (84) of each second switch (56A, 56B, 56C) is always in the off state.

2. - The conversion stage (44) according to claim 1, wherein the first control law is such that the semiconductor element (84) of each second switch (56A, 56B, 56C) is controlled cyclically from the off state to the on state and then from the on state to the off state.

3. - The conversion stage (44) according to claim 1 or 2, wherein the second control law is such that the semiconductor element (84) of each first switch (54A, 54B, 54C) is controlled cyclically from the off state to the on state and then from the on state to the off state.

4. - The conversion stage (44) according to any one of the preceding claims, wherein the conversion stage forms according to the first control law a boost converter suitable for converting a DC voltage between the intermediate terminals (34, 36) into another DC voltage of higher value between the output terminals (38, 40), and/or the conversion stage forms according to the second control law a buck converter suitable for converting the DC voltage between the intermediate terminals (34, 36) into another DC voltage of lower value between the output terminals (38, 40).

5. - The conversion stage (44) according to any one of the preceding claims, wherein the conversion stage (44) is adapted to successively select the first control law and then the second control law in order to switch from a boost conversion operating mode to a buck conversion operating mode, or successively the second control law and then the first control law in order to switch from a buck conversion operating mode to a boost conversion operating mode.

6. - The conversion stage (44) according to any one of the preceding claims, wherein the control means (64) are adapted to control the electronic switches (54A, 54B, 54C, 56A, 56B, 56C) of the switching branches (52A, 52B, 52C), each according to a switching law, and the switching laws of the switching branches (52A, 52B, 52C) are shifted from each other.

7. - The conversion stage (44) according to claim 6, wherein the switching laws of each of the branches (52A, 52B, 52C) are of the same frequency (F) and are phase-shifted from each other, the phase shift between the switching laws of each of the branches (52A, 52B, 52C) preferably being equal to 360°/P.

8. - An electrical converter (30; 110A, 110B) suitable for connection to an AC electrical network (24) having M phase(s), M being greater than or equal to 1, the converter (30; 110A, 110B) comprising:
- M input terminal(s) (32), where each input terminal (32) corresponding to a phase of the AC network (24), a first (34) and a second (36) intermediate terminals, and two output terminals (38, 40),
- a first conversion stage (42), connected to the input terminals (32) and comprising a voltage rectifier (48) capable of converting the input AC voltage into an intermediate DC voltage delivered between the first and second intermediate terminals (34, 36), and
- a second conversion stage (44), connected to the intermediate terminals (34, 36) at the output of the first conversion stage (42)
**characterized in that** the second conversion stage (44) is according to any of the preceding claims.

9. - The converter (30; 110A, 110B) according to claim 8, wherein the converter (30; 110A, 110B) further comprises a feedback link (63; 116) connected between one (38) of the two output terminals and a filter (50), the filter (50) being connected to the output of the voltage rectifier (48), the feedback link (63; 116) enabling the discharge of the capacitor (60) connected between the two output terminals (38, 40) to be controlled.

10. - A device (100) for converting an alternating current into a direct current, the conversion device (100) being suitable for connection to an alternating electrical network (24) comprising M phase(s), M being greater than or equal to 1, the conversion device (100) comprising:
- a voltage transformer (102) comprising a primary circuit (104) having M primary windings, a first (106) and a second (108) secondary circuits each having M secondary windings,
- a first electrical converter (110A) connected to the first secondary circuit (106), and
- a second electrical converter (110B) connected to the second secondary circuit (108),
**characterized in that** the first and second electrical converters (110A, 110B) are each according to claim 8 or 9.

11. - The device (100) according to claim 10, wherein M is equal to 3, the three primary windings are wye-connected, the three secondary windings of the first secondary circuit (106) are delta-connected, and the three secondary windings of the second secondary circuit (108) are wye-connected.

12. - A station (10) for charging an electric battery (12), in particular an electric battery (12) of a motor vehicle (14), comprising a housing (16) and an electrical connector (20) for electrical connection to the battery (12),
**characterized in that** it comprises a conversion element (18) of an electrical converter (30; 110A, 110B) according to claim 8 or 9 and a conversion device (100) according to claim 10 or 11, the conversion element (18) being disposed in the housing (16).

13. - The charging station (10) according to claim 12, wherein the station (10) further comprises an electrical connection cable (22), arranged at least partially outside the housing (16) and connecting the electrical connector (20) to the conversion element (18).
